(19) Europäisches Patentamt
European Patent Office
Office européen des brevets

(11) Veröffentlichungsnummer: **0 087 577**
**B1**

(12) # EUROPÄISCHE PATENTSCHRIFT

(45) Veröffentlichungstag der Patentschrift: **31.10.84**

(51) Int. Cl.³: **C 07 C 143/86**

(21) Anmeldenummer: **83100573.1**

(22) Anmeldetag: **22.01.83**

(54) **Verfahren zur Herstellung von Sulfonamiden.**

(30) Priorität: **06.02.82 DE 3204168**

(43) Veröffentlichungstag der Anmeldung: **07.09.83 Patentblatt 83/36**

(45) Bekanntmachung des Hinweises auf die Patenterteilung: **31.10.84 Patentblatt 84/44**

(84) Benannte Vertragsstaaten: **BE CH DE FR GB LI**

(56) Entgegenhaltungen:
**CHEMICAL REVIEW, Band 80, 1980, Baltimore, G.A. BENSON et al. "Sulfamic acid and its N-substituted derivatives", Seiten 151-186**
**CHEMISCHE BERICHTE, Band 108, Nr. 7, 1975, R. APPEL et al. "Darstellung und Reaktionen silylierter Amidoschwefelsäurederivate mit Schwefel (IV)-halogeniden", Seiten 2340-2348**
**ANGEWANDTE CHEMIE, Band 60, Nr. 11/12, 1948, Weinheim, A.M. PAQUIN "Neue Verbindungen und Reaktionen des Sulfamids", Seiten 316-320**

(73) Patentinhaber: **BASF Aktiengesellschaft, Carl-Bosch-Strasse 38, D-6700 Ludwigshafen (DE)**

(72) Erfinder: **Acker, Rolf-Dieter, Dr., Tuchbleiche 8, D-6906 Leimen (DE)**

**EP 0 087 577 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Herstellung von Sulfonamiden durch Umsetzung von Ammoniak oder Aminen mit Halogensilanen und anschließende Umsetzung des gebildeten Silylamins mit Sulfurylchlorid in Gegenwart eines unter den Reaktionsbedingungen inerten Lösungsmittels.

Es ist bekannt, Sulfonamide durch längeres Erhitzen von Aminen mit Sulfamid herzustellen (A. M. Paquin, Angew. Chem., Band 60, Seiten 316–320 [1948]).

Weiterhin lassen sich Sulfonamide durch Reaktion von Amidosulfonylchloriden mit Aminen herstellen (G. A. Benson/W. J. Spillane, Chem. Rev., Band 1980 [80], Seiten 151–186, besonders 173).

Es wurde nun gefunden, daß man Sulfonamide der Formel

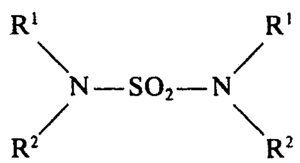

(I)

worin die einzelnen Reste $R^1$ und $R^2$ gleich oder verschieden sind und jeweils einen aliphatischen, cycloaliphatischen, araliphatischen oder aromatischen Rest oder ein Wasserstoffatom bedeuten, durch Umsetzung von Sulfonylhalogeniden mit Stickstoffverbindungen, vorteilhaft erhält, wenn man

a) Ammoniak oder ein Amin der Formel

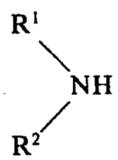

(II)

worin $R^1$ und $R^2$ die vorgenannte Bedeutung besitzen, mit einem Halogensilan der Formel

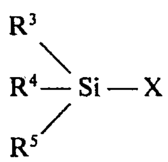

(III)

worin die einzelnen Reste $R^3$, $R^4$ und $R^5$ gleich oder verschieden sind und jeweils einen aliphatischen oder aromatischen Rest oder ein Halogenatom bedeuten, und X ein Halogenatom bezeichnet, umsetzt und

b) das so gebildete Silylamin der Formel

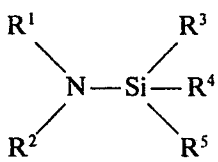

(IV)

worin $R^1$ bis $R^5$ die vorgenannten Bedeutungen besitzen, mit Sulfurylchlorid in Gegenwart eines unter den Reaktionsbedingungen inerten Lösungsmittels umsetzt.

Das erfindungsgemäße Verfahren kann für den Fall der Verwendung von Methylamin, Trimethylchlorsilan und Sulfurylchlorid durch die folgenden Formeln wiedergegeben werden:

$$4\,CH_3-NH_2 + 2\,(CH_3)_3SiCl \rightarrow 2\,(CH_3)_3SiNH-CH_3 + 2\,CH_3NH_3 + Cl^-$$

$$2\,(CH_3)_3SiNH-CH_3 + SO_2Cl_2 \rightarrow CH_3NHSO_2NH-CH_3 + 2\,(CH_3)_3SiCl$$

Im Hinblick auf die bekannten Verfahren liefert das erfindungsgemäße Verfahren Sulfonamide auf einfacherem und wirtschaftlicherem Weg in guter Ausbeute und Reinheit. Aufwendigere Ausgangsstoffe wie Sulfamid oder Amidosulfonylchloride werden vermieden; die im erfindungsgemäßen Verfahren eingesetzten Halogensilane können wiederverwertet werden.

Die Ausgangsstoffe II und III können in stöchiometrischer Menge oder im Überschuß des einen, bezogen auf den anderen Ausgangsstoff, zweckmäßig von 1,0 bis 4,0, vorzugsweise 1,6 bis 2,4 Mol Ausgangsstoff II je Mol Ausgangsstoff III, umgesetzt werden. Bei Verwendung einer Hilfsbase werden zweckmäßig 0,5 bis 2, vorzugsweise 0,8 bis 1,2 Mol Ausgangsstoff II je Mol Ausgangsstoff III verwendet, wobei die Hilfsbase vorteilhaft in Mengen von 0,5 bis 3,0, insbesondere 0,8 bis 1,5 Äquivalenten, bezogen auf 1 Mol Ausgangsstoff III, eingesetzt wird.

Bevorzugte Ausgangsstoffe II, III, Stoffe IV und dementsprechend Endstoffe I sind solche, in deren Formeln die einzelnen Reste $R^1$ und $R^2$ gleich oder verschieden sind und jeweils einen unsubstituierten oder gegebenenfalls durch Chloralkyl-, Thioalkyl-, Alkoxygruppen mit 1 bis 4 Kohlenstoffatomen oder Cyanalkylgruppen mit 2 bis 5 Kohlenstoffatomen oder Dialkylaminoalkylgruppen mit 1 bis 4 Kohlenstoffatomen je Alkylgruppe am Stickstoffatom substituierten Alkylrest mit 1 bis 7 Kohlenstoffatomen oder Alkenylrest mit 2 bis 7 Kohlenstoffatomen, einen Cycloalkylrest mit 5 bis 8 Kohlenstoffatomen, einen Aralkylrest oder Alkylarylrest mit 7 bis 12 Kohlenstoffatomen, oder einen gegebenenfalls durch 1 bis 2 Chloratome, Bromatome, Alkylgruppen oder Alkoxygruppen mit jeweils 1 bis 4 Kohlenstoffatomen, Nitrogruppen und/oder Cyanogruppen substituierten Phenylrest oder ein Wasserstoffatom bedeuten, die einzelnen Reste $R^3$, $R^4$ und $R^5$ gleich oder verschieden sind und jeweils einen Alkylrest mit 1 bis 7 Kohlenstoffatomen oder einen gegebenenfalls durch 1 bis 2 Chloratome, Bromatome, Alkylgruppen oder Alkoxygruppen mit jeweils 1 bis 4 Kohlenstoffatomen, Nitrogruppen und/oder Cyanogruppen substituierten Phenylrest oder ein Bromatom oder insbesondere ein Chloratom bedeuten, X ein Bromatom oder insbesondere ein Chloratom bezeichnet. Die vorgenannten Reste können noch durch unter den Reaktionsbedingungen inerte Gruppen, z. B. Alkyl- oder Alkoxygruppen mit jeweils 1 bis 4 Kohlenstoffatomen, substituiert sein.

So kommen beispielsweise folgende Ausgangsstoffe II in Betracht: Methyl-, Ethyl-, Propyl-, Isopropyl-, Butyl-, Isobutyl-, sek.-Butyl-, tert.-Butyl-, Cyclohexyl-, Cyclopentyl-, Benzyl-, Phenyl-amin; Ammoniak, N-Propyl-N-ethyl-amin, N-Methylanilin; Dimethyl-, Diethyl-, Dipropyl-, Diisoproypl-, Dibutyl-, Di-tert.-butyl-, Di-sek.-Butyl-, Diisobutyl-, Dicyclohexyl-, Dicyclopentyl-, Dibenzyl-, Diphenylamin, Allyl-, Methoxymethyl-, Methoxyethyl-, Methoxypropyl-, Chlormethyl-, Chlorethyl-, Chlorpropyl-, Cyanethyl-, Methyl-thioethyl-, N,N-Dimethylaminoethyl-, N,N-Dimethylaminopropylamin.

So kommen beispielsweise folgende Ausgangsstoffe III in Frage: Trimethyl-, Triethyl-, Tripropyl-, Triisopropyl-, Tributyl-, Trisek.-butyl-, Triisobutyl-, Tri-tert.-butyl-, Methyl-diethyl-, Triphenyl-silanchlorid; vorgenannte Chloride, deren 3 weitere Substituenten durch 1, 2 oder 3 Chloratome ersetzt sind; entsprechende Bromide.

Die Umsetzung wird in der Regel bei einer Temperatur von −80 bis +100°C, vorteilhaft in der Stufe a) von −40 bis +100°C, insbesondere −20 bis +70°C, vorteilhaft in der Stufe b) −80 bis +80°C, insbesondere −80 bis +60°C, drucklos oder unter Druck, kontinuierlich oder diskontinuierlich durchgeführt. Zweckmäßig verwendet man in beiden Stufen unter den Reaktionsbedingungen inerte Lösungsmittel. Als Lösungsmittel kommen z. B. in Frage: Halogenkohlenwasserstoffe, insbesondere Chlorkohlenwasserstoffe, z. B. Tetrachlorethylen, 1,1,2,2- oder 1,1,1,2-Tetrachlorethan, Dichlorpropan, Methylenchlorid, Dichlorbutan, Chloroform, Chlornaphthalin, Dichlornaphthalin, Tetrachlorkohlenstoff, 1,1,1- oder 1,1,2-Trichlorethan, Trichlorethylen, Pentachlorethan, o-, m-, p-Difluorbenzol, 1,2-cis-Dichlorethylen, Chlorbenzol, Fluorbenzol, Brombenzol, Jodbenzol, o-, p- und m-Dichlorbenzol, o-, m-, p-Dichlorbenzol, o-, m-, p-Chlortoluol, 1,2,4-Trichlorbenzol; Ether, z. B. Ethylpropylether, Methyl-tert.-butylether, n-Butylethylether, Di-n-butylether, Diisobutylether, Diisoamylether, Diisopropylether, Anisol, Phenetol, Cyclohexylmethylether, Diethylether, Ethylenglykoldimethylether, Tetrahydrofuran, Dioxan, Thioanisol, 2,2'-Dichlordiethylether; Nitrokohlenwasserstoffe, wie Nitromethan, Nitroethan, Nitrobenzol, o-, m-, p-Chlornitrobenzol, o-Nitrotoluol; Nitrile, wie Acetonitril, Butyronitril, Isobutyronitril, Benzonitril, m-Chlorbenzonitril; aliphatische oder cycloaliphatische Kohlenwasserstoffe, z. B. Heptan, Pinan, Nonan, o-, m-, p-Cymol, Benzinfraktionen innerhalb eines Siedepunktintervalls von 70 bis 190°C, Cyclohexan, Methylcyclohexan, Dekalin, Petrolether, Hexan, Ligroin, 2,2,4-Trimethylpentan, 2,2,3-Trimethylpentan, 2,3,3-Trimethylpentan, Octan; Ester, z. B. Ethylacetat, Acetessigester, Isobutylacetat; Amide, z. B. Formamid, Methylformamid, Dimethylformamid; Ketone, z. B. Aceton, Methylethylketon; und entsprechende Gemische. Zweckmäßigerweise verwendet man das Lösungsmittel in einer Menge von 100 bis 2000 Gew.-%, vorzugsweise von 200 bis 700 Gew.-%, bezogen auf die Gewichtsmenge der beiden Ausgangsstoffe II und III zusammen.

Man kann für beide Stufen das gleiche oder unterschiedliche Lösungsmittel verwenden. Ebenso kann nach der Umsetzung der Stufe a) der gebildete Stoff IV isoliert und dann in der Stufe b) umgesetzt werden. Zweckmäßiger arbeitet man einbadig ohne Zwischenisolierung von Stoff IV. Man kann einbadig umsetzen und die gesamte Lösungsmittelmenge in Stufe a) einleiten.

Zweckmäßig verwendet man eine Hilfsbase, um den gebildeten Halogenwasserstoff zu binden und so Verluste an Ausgangsstoff II zu vermeiden. Als Hilfsbasen kommen z. B. in Frage: Trimethylamin, Triethylamin, Tri-n-propylamin, Triisopropylamin, Tri-n-butylamin, Triisobutylamin, Tri-sek.-butylamin, Tri-tert.-butylamin, Tribenzylamin, Tricyclohexylamin, Triamylamin, Diisopropylethylamin, Trihexylamin, N,N-Dimethylanilin, N,N-Diethylanilin, N,N-Dipropylanilin, N,N-Dimethyltoluidin, N,N-Diethyltoluidin, N,N-Dipropyltoluidin, N,N-Dimethyl-p-aminopyridin, N,N-Diethyl-p-aminopyridin, N,N-Dipropyl-p-aminopyridin, N-Methylpyrrolidon, N-Ethylpyrrolidon, N-Methylpiperidin, N-Ethylpiperidin, N-Methylpyrrolidin, N-Ethylpyrrolidin, N-Methylimidazol, N-Ethylimidazol, N-Methylpyrrol, N-Ethylpyrrol, N-Methylmorpholin, N-Ethylmorpholin, N-Methylhexamethylenimin, N-Ethylhexamethylenimin, Pyridin, Chinolin, $\alpha$-Picolin, $\beta$-Picolin, $\gamma$-Picolin, Isochinolin, Pyrimidin, Acridin, N,N,N',N'-Tetramethylethylendiamin, N,N,N',N'-Tetraethylethylendiamin, Chinoxalin, Chinazolin, N-Propyldiisopropylamin, N,N'-Dimethylcyclohexylamin, 2,6-Lutidin, 2,4-Lutidin, Trifurylamin, Triethylendiamin. Vorteilhaft verwendet man 0,5 bis 3,0, insbesondere 0,8 bis 1,5 Äquivalente Hilfsbase je Mol Ausgangsstoff III.

Stoff IV kann mit Sulfurylchlorid in stöchiometrischer Menge oder mit einem Überschuß umgesetzt werden, vorzugsweise in einer Menge von 0,25 bis 1,5, insbesondere 0,4 bis 0,9 Mol Sulfurylchlorid je Mol Ausgangsstoff IV.

Die Reaktion kann wie folgt durchgeführt werden: Ein Gemisch der Ausgangsstoffe II, III und gegebenenfalls die Hilfsbase und Lösungsmittel wird in Stufe a) während 0,2 bis 6 Stunden bei der Reaktionstemperatur gehalten. Das Arbeiten unter Schutzgas, z. B. Stickstoff oder Argon, ist nicht zwingend notwendig, aber vorteilhaft. Zweckmäßig wird Ausgangsstoff II in einem geeigneten Lösungsmittel vorgelegt, dann werden Ausgangsstoff III und gegebenenfalls die Hilfsbase portionsweise zugegeben. Die umgekehrte Zugabe (Vorlegen des Ausgangsstoffs III, Zutropfen des Ausgangsstoffs II und gegebenenfalls der Hilfsbase) ist ebenfalls möglich. Man kann nun Stufe b) ohne weitere Aufarbeitung anschließen, die Reaktionstemperatur der Stufe a) auf die der Stufe b) bringen, Sulfurylchlorid und gegebenenfalls Lösungsmittel zusetzen und 0,5 bis 8 Stunden umsetzen. Man kann auch Stufe a) zuerst vom Salz abfiltrieren und die Reaktion dann fortsetzen, man kann aber auch das entstandene Silylamin IV durch Destillation reinigen und in Stufe b) einsetzen. Stufe b) wird zweckmäßig so durchgeführt, daß man entweder das gereinigte Silylamin IV in einem Lösungsmittel löst und Sulfurylchlorid zugibt, oder man zum Reaktionsgemisch der Silylierungsreaktion bei der Reaktionstemperatur von Stufe b) Sulfurylchlorid portionsweise zugibt. Die Mischung läßt man dann zweckmäßig nach weiterer Kühlung, z. B. auf 20°C, aufwärmen, auf z. B. 0°C, und 2 bis 12 Stunden bei Raumtemperatur nachrühren. Es ist möglich, zur Bindung eines Aminunterschusses in Stufe b) noch geringe Mengen an Ausgangsstoff III zuzusetzen. Gegebenenfalls kann man das Gemisch zur Vervollständigung der Reaktion bei höherer Temperatur, z. B. von 25 bis 60°C, nachreagieren lassen. Nach Beendigung der Reaktion in Stufe b) werden zweckmäßig Ausgangsstoff III und das Lösungsmittel abdestilliert, der Rückstand enthält den Endstoff I. Er kann durch Destillation, Umkristallisation oder Extraktion gereinigt werden. Bei getrennten Stufen mit Isolierung von Stoff IV betragen die Reaktionszeiten zweckmäßig in Stufe a) 0,2 bis 6 Stunden und in Stufe b) 0,5 bis 8 Stunden.

Die erfindungsgemäßen Sulfonamide I finden Verwendung als Zwischenprodukte bei Pharmaka und Pflanzenschutzmitteln, aber auch als Ausgangsstoffe zur Herstellung von Alkylamidosulfonylchloriden (DE-OS 1 121 060, DE-PS 1 237 582).

## Beispiel 1

a) 70 Gramm Methylamin wurden bei −20°C kondensiert und 200 Gramm auf −20°C gekühltes Xylol wurden zugeführt. Dann wurden 108,5 Gramm Trimethylchlorsilan portionsweise unter Stickstoff zugegeben. Die Temperatur wurde zwischen −15°C und −5°C gehalten. Man erwärmte die Mischung auf 22°C und ließ eine Stunde nachrühren. Nach dem Abfiltrieren vom Ungelösten wurde das Methyltrimethylsilylamin aus der Reaktionsmischung herausdestilliert. Es ergaben sich 63 Gramm N-Methyl-N-trimethylsilylamin vom Siedepunkt 66 bis 70°C/1005 mbar und $n_D^{23}$ = 1,3910.

b) 20,6 Gramm N-Methyl-N-trimethylsilylamin (Beispiel 1a) und 30 Gramm Acetonitril wurden bei −30°C unter Stickstoff zusammengegeben. Nach Zugabe von 1,1 Gramm Trimethylchlorsilan fügte man portionsweise bei −35 bis −30°C 13,5 Gramm Sulfurylchlorid zu. Man rührte 15 Minuten bei −30°C nach, anschließend eine Stunde bei 0°C, dann 5 Stunden bei 22°C. Nach Einengen wurde das Reaktionsgemisch destilliert (92°C−105°C/0,13 mbar). Man erhielt 8,3 Gramm N,N'-Dimethylsulfonamid (73% der Theorie) vom Fp 69−72°C.

## Beispiel 2

a) 118 Gramm Isopropylamin wurden in 300 Gramm Pentan vorgelegt. Zwischen 0°C und −10°C gab man portionsweise Trimethylchlorsilan (114,5 Gramm) unter Stickstoff hinzu und rührte eine Stunde bei 22°C nach. Nach dem Filtrieren wurde destilliert. Man erhielt 95,6 Gramm N-Isopropyl-N-trimethylsilylamin vom Siedepunkt 95 bis 100°C/1005 mbar und $n_D^{23}$ = 1,3941.

b) Zu 13,1 Gramm N-Isopropyl-N-trimethylsilylamin in 60 Gramm Methylenchlorid fügte man eine Lösung von 6,75 Gramm Sulfurylchlorid in 12 Gramm Methylenchlorid bei −70 bis −75°C portionsweise zu, hielt 15 Minuten bei −75°C, eine Stunde bei 0°C und rührte eine Stunde bei 22°C nach. Die leicht flüchtigen Anteile wurden abdestilliert, der Rückstand wurde mit Eiswasser versetzt und abgesaugt. Man erhielt 12,8 Gramm N,N'-Diisopropylsulfonamid (71% der Theorie) vom Fp 99−102°C.

Beispiel 3

29,5 Gramm Isopropylamin und 55,6 Gramm Triethylamin wurden in 320 Gramm Tetrahydrofuran vorgelegt. Zwischen 0°C und −5°C fügte man 60 Gramm Trimethylchlorsilan portionsweise unter Stickstoff zu und rührte 30 Minuten bei 22°C und eine Stunde bei 60°C nach. Man kühlte auf −10°C ab und gab portionsweise 33,8 Gramm Sulfurylchlorid zu, ließ die Mischung auf 22°C erwärmen und rührte 2 Stunden nach. Trimethylchlorsilan und das Lösungsmittel wurden abdestilliert und der Rückstand mit Eiswasser gewaschen. Es ergaben sich 30,5 Gramm N,N'-Diisopropylsulfonamid (68% der Theorie), Fp 98−101°C.

Beispiel 4

49,5 Gramm Cyclohexylamin wurden in 320 Gramm Tetrahydrofuran vorgelegt. Zwischen −5°C und 0°C wurden 32,3 Gramm Dimethyldichlorsilan portionsweise zugegeben. Man ließ eine Stunde bei 22°C rühren, kühlte dann auf −30°C und gab dann portionsweise 16,9 Gramm Sulfurylchlorid zu. Nach 3 Stunden Rühren bei 22°C destillierte man Lösungsmittel und Chlorsilan ab und ließ den Rückstand auskristallisieren. Man erhielt nach dem Ausrühren mit Wasser 22 Gramm N,N'-Dicyclohexylsulfonamid (67% der Theorie) vom Fp 151−153°C.

Beispiel 5

Die Umsetzung wurde analog Beispiel 4 durchgeführt. Die Ergebnisse zeigt die Tabelle.

Tabelle

| Ausgangsstoff II in Gramm | III in Gramm | $R^1R^2N-SO_2-NR^1R^2$ $R^1$ | $R^2$ | Ausbeute in % der Theorie | Endstoff I $Fp/n_D$ |
|---|---|---|---|---|---|
| 70,0 | 108,5 | $CH_3-$ | H | 73 | 69–72 |
| 98,0 | 60,0 | $C_2H_5-$ | H | 75 | 112 (Z.) |
| 115 | 113,2 | $n-C_3H_7-$ | H | 69 | 106–108 |
| 118 | 114,5 | $i-C_3H_7-$ | H | 71 | 99–102 |
| 73,0 | 120,0 | $n-C_4H_9-$ | H | 73 | 110–112 |
| 36,5 | 60,0 | $s-C_4H_9-$ | H | 70 | 61–63 |
| 73,0 | 120,0 | $t-C_4H_9-$ | H | 71 | 132 (Z.) |
| 44,5 | 59,8 | $CH_3OCH_2CH_2CH_2-$ | H | 79 | 1,4677 |
| 28,5 | 60,0 | $CH_2=CH-CH_2-$ | H | 65 | 63 (Z.) |
| 49,5 | 32,3 | Cyclohexyl− | H | 67 | 151–153 |
| 46,5 | 60,0 | $C_6H_5-$ | H | 72 | 105–108 |

**Patentanspruch**

Verfahren zur Herstellung von Sulfonamiden der Formel

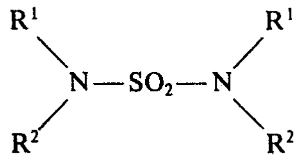

(I)

worin die einzelnen Reste $R^1$ und $R^2$ gleich oder verschieden sind und jeweils einen aliphatischen, cycloaliphatischen, araliphatischen oder aromatischen Rest oder ein Wasserstoffatom bedeuten, durch Umsetzung von Sulfonylhalogeniden mit Stickstoffverbindungen, dadurch gekennzeichnet, daß man

a) Ammoniak oder ein Amin der Formel

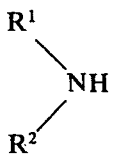

(II)

worin $R^1$ und $R^2$ die vorgenannte Bedeutung besitzen, mit einem Halogensilan der Formel

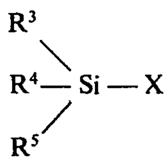

(III)

worin die einzelnen Reste $R^3$, $R^4$ und $R^5$ gleich oder verschieden sind und jeweils einen aliphatischen oder aromatischen Rest oder ein Halogenatom bedeuten, und X ein Halogenatom bezeichnet, umsetzt, und

b) das so gebildete Silylamin der Formel

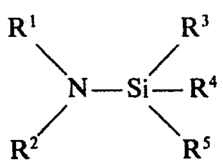

(IV)

worin $R^1$ bis $R^5$ die vorgenannten Bedeutungen besitzen, mit Sulfurylchlorid in Gegenwart eines unter den Reaktionsbedingungen inerten Lösungsmittels umsetzt.

**Claim**

A process for the preparation of a sulfonamide of the formula

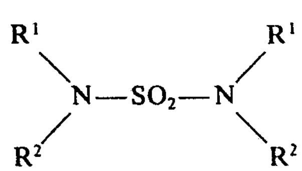

(I)

where the individual radicals $R^1$ and $R^2$ are identical or different and are each an aliphatic, cycloaliphatic, araliphatic or aromatic radical or hydrogen, by reacting a sulfonyl halide with a nitrogen compound, wherein

a) ammonia or an amine of the formula

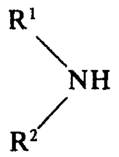

(II)

where $R^1$ and $R^2$ have the above meanings, is reacted with a halosilane of the formula

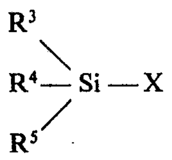

(III)

where the individual radicals $R^3$, $R^4$, and $R^5$ are identical or different and are each an aliphatic or aromatic radical or halogen, and X is halogen, and

b) the resulting silylamine of the formula

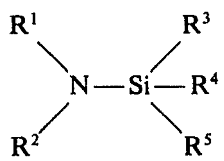

(IV)

where $R^1$, $R^2$, $R^3$, $R^4$, and $R^5$ have the above meanings, is reacted with sulfuryl chloride in the presence of a solvent which is inert under the reaction conditions.

**Revendication**

Procédé de préparation de sulfamides de la formule

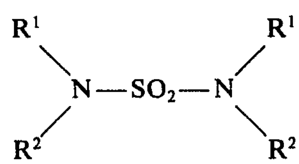

(I)

dans laquelle les substituants $R^1$ et $R^2$ peuvent être identiques ou différents et désigner chacun un groupe aliphatique, cycloaliphatique, araliphatique ou aromatique ou un atome d'hydrogène, par réaction d'halogénures de sulfonyle avec des composés azotés, caractérisé en ce que:

a) on fait réagir de l'ammoniac ou une amine de la formule

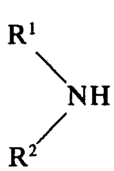

(II)

dans laquelle $R^1$ et $R^2$ possèdent la signification définie, avec un halo-silane de la formule

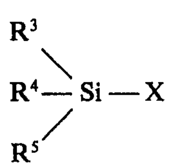

(III)

dans laquelle les substituants $R^3$, $R^4$ et $R^5$ peuvent être identiques ou différents et désigner chacun un groupe aliphatique ou aromatique ou un atome d'halogène et X désigne un atome d'halogène;

b) on fait réagir la sylyl-amine formée, de la formule

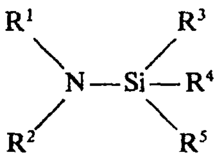

(IV)

dans laquelle $R^1$ à $R^5$ possèdent les significations définies, dans un solvant inerte dans les conditions opératoires, avec le chlorure de sulfuryle.